# EUROPEAN PATENT APPLICATION

(11) **EP 3 725 487 A1**
(43) Date of publication of application: **21.10.2020**
(21) Application number: 19382304.4
(22) Date of filing: 17.04.2019
(51) Int. Cl.: B29C 45/00

(54) **INJECTION MOLD AND PROCESS FOR FORMING A TWO-COMPONENT FLIP-TOP CLOSURE CAP**

(71) Applicant: Matrix, S.A., 17500 Ripoll (Girona) (ES)
(72) Inventor: MILLAN GONZALEZ, Juan, 17500 RIPOLL (ES)
(74) Representative: Ponti & Partners, S.L.P

(57) **Abstract**

The present invention relates to a mold (102, 400, 400) for forming a two-component flip-top closure cap and, more specifically, an injection mold (400) which is configured in such a manner as to form a body portion (1) and an interconnected lid (2), closes the lid (2) on the body portion (1), and at the same time forms a lower piece in other side of the mold (102, 400, 400), attaches the lower piece under the first flip-top cap with the lid (2) being in its closed configuration, and ejects the resulting two-component flip-top closure cap. It also relates to a process for forming the two-component flip-top closure cap and, more specifically, a process which allows the manufacturing of an injected body portion (1) and an injected interconnected lid (2), the closing of the lid (2) on the body portion (1), and at the same time forming a lower piece in other side of the mold (102, 400, 400), attaching the lower piece under the first flip-top cap with the lid (2) being in its closed configuration, and ejecting the resulting two-component flip-top closure cap.

## Description

### Field of the invention:

The present invention relates to a mold for forming a two-component flip-top closure cap and, more specifically, an injection mold which is configured in such a manner as to form a body portion and an interconnected lid, closes the lid on the body portion, and at the same time forms a lower piece in other side of the mold, attaches the lower piece under the first flip-top cap with the lid being in its closed configuration, and ejects the resulting two-component flip-top closure cap.

The present invention also relates to a process for forming the two-component flip-top closure cap and, more specifically, a process which allows the manufacturing of an injected body portion and an interconnected lid, the closing of the lid on the body portion, and at the same time forming a lower piece in other side of the mold, attaching the lower piece under the first flip-top cap with the lid being in its closed configuration, and ejecting the resulting two-component flip-top closure cap.

### Background of the invention:

Injection molds are well known in the state of the art by which a piece of plastic is injected using injection molding systems.

By means of injection processes plastic closure caps are injected for different type of fluid containers, such as for containing liquids, creams or other kind of products, *inter alia*, in the medical, food, or dispensing field.

These closure caps may be composed of one, two or more pieces, depending on their functionality.

One type of known closure caps is the so called flip-top closure cap, which consists of a body portion mounted on a fluid container and a rotating lid connected with a living hinge, wherein the rotating lid is used for opening or closing the product opening.

It is well known in the state of the art to manufacture such flip-top closure caps having an injected living hinge and wherein the lid is closed in the same mold using mechanical systems such as using a pivotable mold portion for closing the injected lid on the injected body portion. The step of closing the lid is carried out within the same molding process, due to the need for the hinge to be in a state of certain temperature so that it does not stress and support a long life of openings. If the closing of the lid were done in cold, it would easily break in a short number of openings.

U.S. patent 5,906,841 discloses one such type of a mold for forming a one piece flip-top cap and process for making such a cap. A mold for forming and closing the one piece flip-top cap prior to ejection from the mold includes a first mold part, an inner core mold part and a second mold part movable into relationship with the first mold part and the inner core mold so as to form a mold cavity therebetween. The mold produces a one piece flip-top cap with a living hinge between the body and lid of the cap and which is maintained in a closed position upon ejection from the mold. Pull straps are used to ensure full closure of the cap lid to the body prior to ejection.

WO2004074129 A1 discloses a closure having a flip-over capping member for a fluid container with aperture extending axially along a longitudinal axis (X-X), comprising: - a tubular body (1) having an end wall (3) which is transverse with respect to the said longitudinal axis (X-X), - an aperture (9), for dispensing fluid from the container (8), formed in the said end wall (3), - a capping member (10), for closing and opening the said aperture (9), connected radially to the said tubular body (1) by means of an integrally formed flexible element (11) wherein the said capping member (10) can close the said aperture (9) by a bending movement about a transverse axis of rotation (R-R) in the area of the said flexible element (11). The radial position of the said axis of rotation (R-R) does not extend outside the peripheral edge (6) of the said end wall (3).

However, when the flip-top closure caps are made of several injected pieces (i.e. more than one single flip-top closure cap having a base portion attached to a rotating lid, e.g. a two-component flip-top closure cap) the assembly of the different injected components takes place in external assembly machines, where they are collected, oriented and assembled in the concrete manner. This assembly operation requires sufficient clearance and involves time consuming, high costs, storage and several molds for each one of the different pieces.

The reason for having two different components in a flip-top closure cap may be aesthetic and/or functional.

Another significant problem related to the molding process for a flip-top closure cap is the time it takes for the part to be formed, cooled and ejected. This time is lengthened by the number of steps required to complete the process, the sequencing of the steps as well as the cooling method used.

A two-component flip-top closure cap having a flip-top closure cap and a lower piece is the piece to be formed by the present invention, wherein the flip-top cap closure has a body portion and a lid connected to the body portion by a live hinge and wherein the lower piece is disposed under the first flip-top cap and attached to it in a non-releasable manner by a fastening means.

It is, therefore, a first object of the present invention to provide an injection mold for forming a two-component flip-top closure cap having a flip-top closure cap and a non-releasable lower piece, wherein the flip-top cap closure has a body portion and a lid attached to the body portion by a live hinge and wherein the lower piece is disposed and attached under the first flip-top cap, wherein the body portion and the lid are injected, the lid is positioned in its closed configuration and the injection and attachment of the lower piece takes place inside the same mold prior to ejection of the resulting two-component flip-top closure cap from the mold.

It is a second object of the present invention to provide a process for forming such a two-component flip-top closure cap according to the invention.

### Summary of the invention:

The first object of the present invention is to provide an injection mold for forming a two-component flip-top closure cap having a flip-top closure cap and a non-releasable lower piece, wherein the flip-top cap closure has a body portion and a lid attached to the body portion by a live hinge and wherein the lower piece is disposed under the first flip-top cap and fixed to it by a fastening means, which solves the aforementioned drawbacks and gives the advantages described below.

For this first purpose, the present invention concerns an injection mold for forming a two-component flip-top closure cap as describe in the previous paragraph, wherein the injection mold comprises at least:
- a first mold portion, which remains static during all the molding cycle, which defines a first portion of the flip-top cap/s and a first portion of the lower piece/s; and
- a second mold portion, which defines a second portion of the flip-top cap/s and second portion of the lower piece/s, wherein the second mold portion is configured for being movable in respect to the first mold portion thereby defining a first partition;
**characterized in that**
- the second mold portion comprises:
   - a pivotable mold portion comprising one or more aligned cavity/ies for injecting a lid, wherein the pivotable mold portion is configured to be pivotable about a first rotation point or axis for mounting the injected lid/s on the injected upper body/ies, thereby forming a flip-top cap/s in an upwards position connected by a corresponding live hinge/s and with the lid/s disposed in a closed position; and
   - a rotatable support configured to be rotatable about a second rotation point or axis for attaching the injected lower piece/s disposed in a downwards position right under the first flip-top cap/s with the lid/s in the closed position without any interference; and
- the injection mold further comprises a third mold portion, which is configured for being movable in respect to the second mold portion, thereby defining a second partition that forms a sufficient clearance for the rotational motion of the rotatable support.

Unlike the injection molds known in the state of the art for forming a two-component flip-top closure cap, the one proposed by the present invention has the particularity that, according to this particular and advantageous configuration of the parts of the mold, all the injections and the assemblies of the two different components of the flip-top closure cap (i.e. flip-top closure cap and the lower piece) are made in the same mold and within the same injection cycle, including the closure of the lid on the body portion and the attachment of the lower piece under the flip-top closure cap.

According to a preferred embodiment of the invention, the second mold portion is disposed below the first mold part, and the third mold portion is disposed below the second mold portion. In this preferred embodiment, the second mold portion is configured for being independently movable in a parallel plane in respect to the first mold portion, and the third mold portion is configured for being independently movable in a parallel plane in respect to the second mold portion.

Additionally, the mold may comprises other mold portions, which may be for example disposed below the third second mold portion, for helping to carry out the injection operations.

In reference to the pivotable mold portion of the second mold portion, and according to a preferred embodiment of the invention, it may rotate about a first point or axis of rotation by means of a pivoting means comprising a rotatable bar that is attached to the pivotable mold portion, which rotates by means of a supplying means comprises a rack-and-pinion type actuator operated by a servomotor or equivalent element. The rack-and-pinion type actuator operates in the following manner: the servomotor (or similar) pushes a rack, said rack is interconnected with a pinion, said pinion is attached to said pivotable mold portion at the axis of rotation of said living hinge. Such interconnectivity allows said servomotor to thereby rotate the pivotable mold part about 180 degrees, from the original molding position to the sealing position, thereby closing the lid on the body portion.

In reference again to the second mold portion, and according to a preferred embodiment of the invention, the rotatable support is rotatable about a second rotation point or axis by means of:
- a holding means for holding the one or more injected lower piece/s in a first position where the injected lower piece(s) is/are in a downwards position and are spaced apart a distance ("d") from the position of the corresponding upper body/ies cavities, and
- a rotating means for rotating the one or more injected lower piece/s describing an arc of radium ("r") from a second rotation point or axis that introduces the injected lower piece/s from the bottom right under the first flip-top cap/s with the lids in the closed position without any interference and the injected lower piece/s being retained by fastening means, so as when mounted a protruding sealing part of the lid is inserted into an upper opening of the lower piece thereby forming a watertight closure between the lid and the lower piece, and wherein the distance ("d") is determined by the arc.

The holding means for holding one or more injected lower piece/s comprises a carrier which is attached to the rotating means. The rotating means comprises a rotating arm attached to a longitudinal bar.

Both rotation movements (i.e. the one of the lid/s and the one of the lower piece/s) are independent, but will be programmed preferably so as to act one after the other.

The second mold portion further comprises a cavity.

In reference to the first mold portion, it further comprises elements for defining the protruding sealing part of the lid/s.

In reference again to the first mold portion, it further comprises respective cavities of the body portion/s and respective housings for the injection nozzle of the upper body for introducing respective injection nozzle/s into the cavity/ies of the body portion.

The first mold portion further may comprise a first injection nozzle housings for introducing respective injection nozzles of the lower piece/s in the lower piece/s cavities disposed in the third mold part. Preferably, the injection nozzle may perform the injection of the lower piece by means of a casting branch and an entrance to the tunnel part.

In order to form the lower piece/s, the first mold portion further comprises a third core pullers for defining a portion of an inner surface of the lower piece/s.

In reference to the third mold portion, it further may comprise respective first core pullers for defining a portion of an inner surface of the body portion/s.

In reference again to the third mold portion, it further may comprise respective first ejectors for ejecting at the end of the mold process the assembled and closed two-component cap.

In reference again to the third mold portion, it further may comprise respective second core pullers for forming defining a portion of the lower piece/s.

In reference again to the third mold portion, it further may comprise respective second ejectors for ejecting the injected lower piece/s individually, and for ejecting the cold runner.

The second object of the present invention is to provide a new process for forming a two-component flip-top closure cap having a first flip-top cap and a non-releasable lower piece, wherein the first flip-top cap has a body portion and a lid connected to the body portion by a live hinge and wherein the lower piece is disposed under the first flip-top cap and fixed to it by a fastening means, wherein a mold defined previously is used. More particularly, the invention relates a process for injecting a flip-top closure cap which has a body portion and a lid, and rotate the lid about 180 degrees to close it on the body portion resulting in a closed flip-top closure cap, and injecting a lower piece and rotating the injected lower piece about 180 degrees until is assembled under the closed flip-top closure cap, so that in the same injection cycle and in the same mould a final two-component flip-top closure cap is produced.

The particularity of this process is that it takes places in a single mold and within a single injection cycle, and wherein the process comprises the steps of:
- Injecting a molten material into a body portion cavity/ies defined on a first side of the mold, an interior mold core and a pivotable lid cavity/ies defined on a second side for forming the one piece flip-top cap having an body portion and a opened-position lid connected by a living hinge, wherein the one piece flip-top cap is disposed in an upwards position;
- Injecting a molten material into a lower piece cavity/ies defined on a third side;
- A first opening movement of a movable portion of the injection mold, wherein a demolding of the lid/s and demolding of the lower piece are produced;
- A second opening movement of another movable portion of the injection mold;
- Leaving the injected lower piece/s held in a first downwards position by a rotatable support, wherein the body portion cavity/ies and the injected lower piece/s in this first position are sufficient clearanced apart a distance ("d") for being rotated with an arc and being positioned under the injected closure cap/s disposed in the body portion cavity/ies;
- With the first and second partitions opened, pivoting a pivotable mold portion of the mold with the injected lid/s about a first point or axis of rotation from an original position to a closing position on the injected upper body/es, so that the flip-top cap is in a closed position inside the first mold cavity;
- With the first and second partitions opened, rotating the downwards-positioned injected lower piece/s about a second point or axis of rotation for attaching them without any interference right under the first flip-top cap/s with the lid/s being in the closed position, and thereby forming an assembled two-component cap/s in a closed configuration;
- pivoting the pivotable mold portion back from the closing position to the original position, and rotating the rotatable support back to the original position;
- returning the bottom movable portion to be in contact to the intermediate mold portion for ejecting the two-component cap/s by means of an ejector;
- so that this process allows the separate injection of both components (one piece flip-top cap/s with lid opened and lower piece) into the same mold and at the same time, allows after the closure of the lid on the base portion, and also the assembly of the injected lower piece/s under the one piece flip-top cap/s with lid closed.

The process begins by closing all the mold portions of the mold for closing the mold.

Preferably, in order to save time, the step of injecting a molten material into body portion mold cavity/ies and into a pivotable lid mold cavity/ies is produced simultaneously or in an overlapping range of time.

Also preferably, in order to save time, the step of injecting a molten material into body portion mold cavity/ies and into a pivotable lid mold cavity/ies and the step of injecting a molten material into the lower piece mold cavity/ies is produced simultaneously or in an overlapping range of time.

Also preferably, in order to save time, the step of pivoting the lid/s is produced simultaneously or in an overlapping range of time with the step of rotating the lower piece/s.

In a preferred embodiment, the step of pivoting the lid/s is produced overlapped with the step of rotating the lower piece/s, but the closing of the lid/s is produced before the assembling of the lower piece/s. This advantageously permits to fasten the lower piece in a better position if the lid is already closed on the body portion.

In a preferred embodiment, before the last step of activating the ejector, a cooling step of the one piece flip-top cap may be produced.

In a preferred embodiment, in the second opening movement step, allows that releasing the negative of the anchoring surface portion of the body portion without deforming it by means of a main core pullers.

Although the time involved in molding, cooling, sealing and ejecting the two-component flip-top closure cap may change according to the molten material used, in the preferred embodiment the entire molding cycle is run in about 8-15 seconds.

With specific reference to the sizes of the various molds, there are no size limitations on the molded two component flip-top closure cap, and hence, the sizes of the pieces will vary according to individual application.

### Brief description of the drawings:

The invention will now be described more fully with reference to an example of its embodiment, illustrated solely for guidance and without restrictive intent, in the attached drawings, in which:
Figure 1 shows a perspective view of a first embodiment of the final two-component flip-top closure cap according to the invention, formed by two different components (flip-top closure cap and non-releasable lower piece), with the lid in the closed and open position;
Figure 2 shows a perspective view of the two separate components that forms the flip-top closure cap like that of Figure 1, before being mounted;
Figure 3 shows two different positions of a cross section of the closure cap of the embodiment of Figure 1, when mounting the lower piece from the bottom side of the flip-top closure cap, following the arrow: a first position where the lower piece is in a position before the assembly and a second position where the lower piece is placed in the mounting position with fastening means that prevent from being disassembled;
Figure 4 shows also a cross-section view of the closure cap of the embodiment of Figure 1 when the lid is in the closed position, where a protruding sealing part of the lid remains fitted into the upper opening of the lower piece;
Figure 5 shows a plant view of a first embodiment of the mold according to the invention which can be used for producing the closure cap according to the invention, where four cavities of the all the components are disposed aligned;
Figure 6 shows a cross-section view of the first embodiment of the mold of Figure 5 in a closed position and with all the elements which allow to inject the two different components: flip-top closure cap and lower piece at the same time.
Figure 7 shows a cross-section view of the first embodiment of the mold of Figures 5 and 6 in a opened position, where two different partitions are represented.
Figure 8 shows a enlarged cross-section view of the second mold part of the first embodiment of the mold when the rotating means are in the original rotating position.
Figure 9 shows an enlarged cross-section view of the second mold part of the first embodiment of the mold when the rotating means are in another rotating position following an arc.
Figure 10 shows a perspective view of a first part of the first embodiment of the mold, in particular the second mold part with the pivoting means of the lid.
Figure 11 shows a perspective view of another part of the first embodiment of the mold, in particular the second mold part with the rotating means of the lower piece.

The drawings are not necessarily to scale. In certain instances, details that are not necessary for an understanding of the embodiments or that render other details difficult to perceive may have been omitted.

### Detailed description of the preferred embodiments:

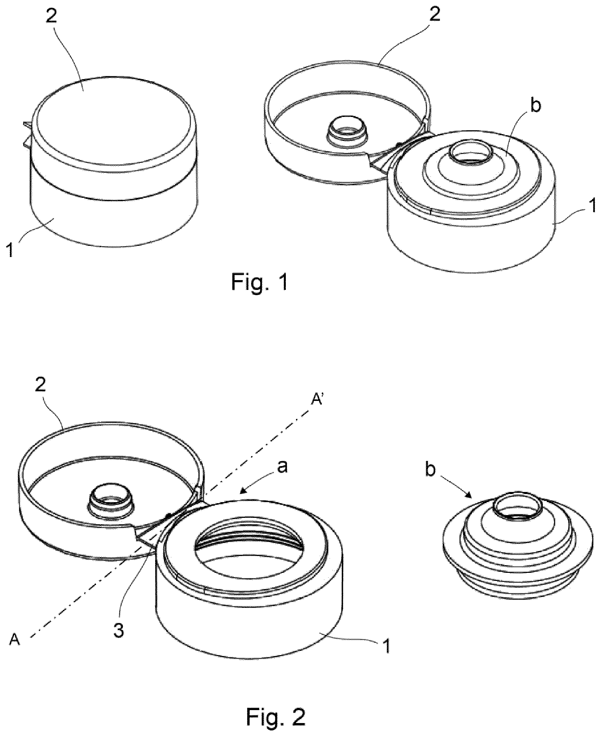

With reference to the aforementioned figures and in particular to Figures 1 to 4, a preferred embodiment of a two-component flip-top closure cap/s (a+b) is depicted.

The two-component flip-top closure cap/s (a+b) includes a first component consisting of a flip-top closure cap (a) and a second component consisting of non-releasable lower piece (b).

The two-component flip-top closure cap/s (a+b) is injection molded in the mold 400 with a thermoplastic material, preferably plastic.

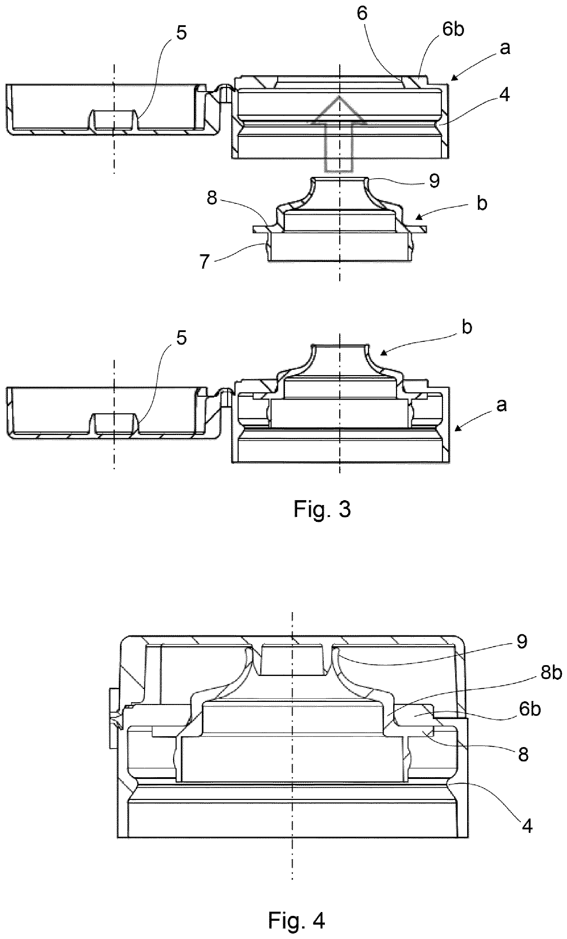

The flip-top closure cap (a) has a body portion (1) and an interconnected lid (2) attached to the body portion (1) by a live hinge (3) which allows the lid (2) to rotate in respect to an axis (A-A') parallel to the longitudinal direction of the hinge (3), see Figure 2. The body portion (1) has a cylindrical shape with a central hole and with a narrowing portion on the upper part of the central hole forming a narrowed opening (6), see Figure 3. In the intermediate part of the interior surface of the body portion (1) an anchoring surface portion (4) is provided. The lid (2) includes a protruding sealing part (5) which has a particular configuration and dimensions so as to be perfectly fitted into an upper opening (9) of the lower piece (b).

As it can be seen in Figure 3, the lower piece (b) is mounted under the first flip-top cap (a) and attached to it by a fastening means. The fastening means comprises a holding surface for holding prisoner the lower piece (b) under the flip-top closure cap (a). The lower piece (b) has a revolution shape with the upper opening (9). It has also an inferior cylindrical portion (7) and an intermediate protruding portion (8) which extends laterally outwards. This intermediate protruding portion (8) is configured so as to abuts against the inferior surface of the narrowed upper portion of the portion body (1) when mounted. In the second Figure 3 and in Figure 4, this position is represented, where the upper surface of the intermediate protruding portion (8) of the lower piece (b) abuts against the inferior surface of the narrowed upper portion of the portion body (1). The lower piece (b) also includes a subsequent cylindrical portion (8b) below the intermediate protruding portion (8), which is configured so as to fit against the interior surface of upper surface (6b) of the body portion (1).

Other configurations of the lower piece (b) and the first flip-top cap (a) are possible.

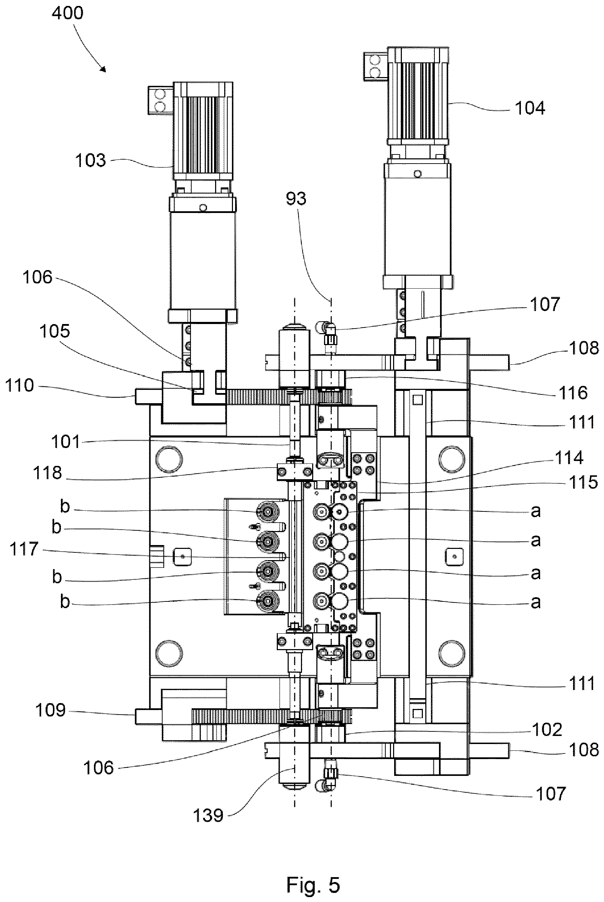

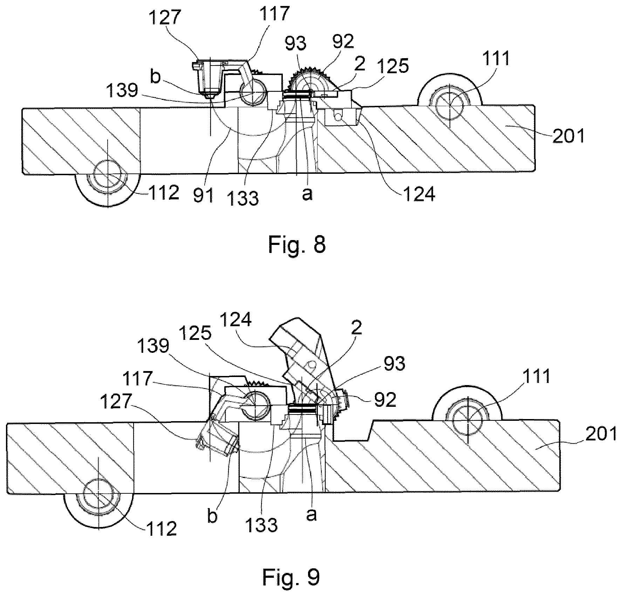

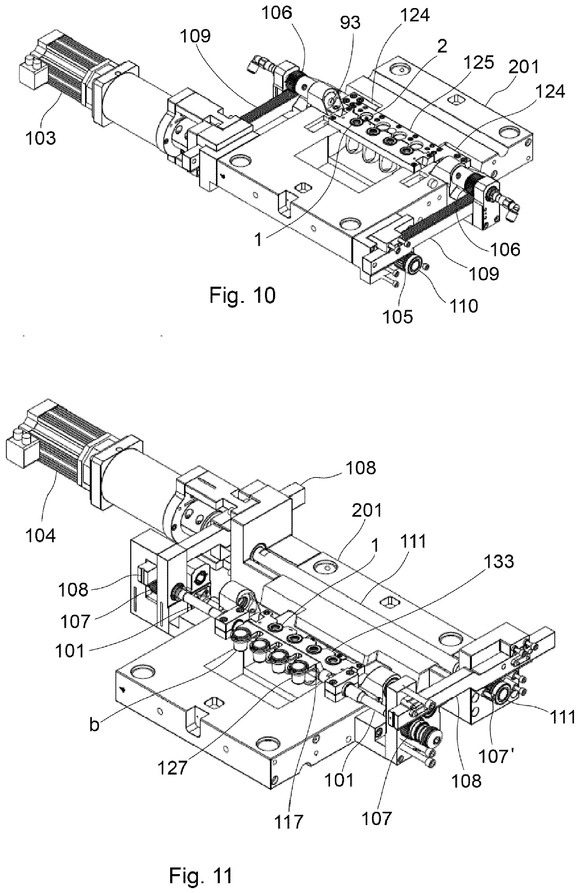

With reference to Figures 5 to 11, a preferred embodiment of a mold (400) according to the present invention is provided for making a two-component flip-top closure cap/s (a+b). The mold (400) is adapted so as to in one side of the mold inject the flip-top closure cap (1 and 2) and after that closing the lid (2) onto the body portion (1) with a pivoting means while the body portion (1) is still in the mold; and in other side of the mold inject at the same time as the previous injection of the flip-top closure cap (1 and 2) the lower piece (b) and with a rotating means fitting the injected lower piece (b) under the injected flip-top closure cap (1 and 2) with the lid being in a closed position. These operations are made in the same injection cycle, so as a resulting flip-top closure cap/s is obtained.

Turning attention to Figure 5, the mold (400) includes several cavities of the all the components which are disposed aligned, so as to inject in the same cycle mold four closure cap (a+b) simultaneously. In this particular embodiment, four cavities are provided for the portion bases (1) for the lids (2) and for the lower pieces (b).

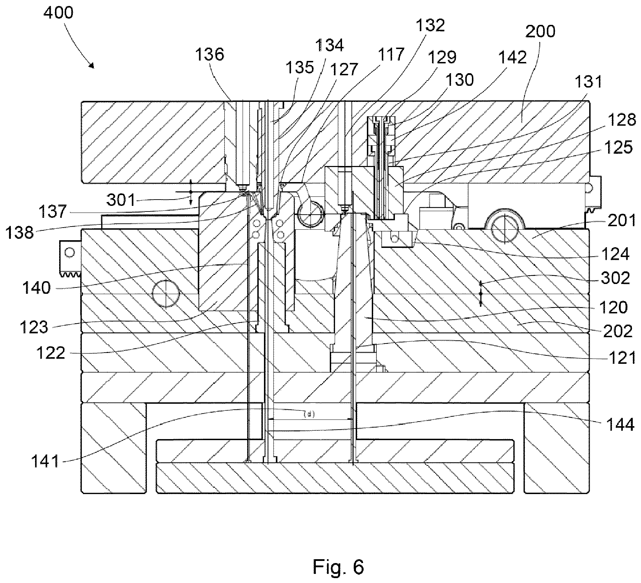

With particular reference to Figure 6, the mold (400) includes an upper first mold portion (200), an intermediate second mold portion (201) and a bottom third mold portion (202). Other inferior portions are also represented.

The upper first mold portion (200) remains static during all the molding cycle, and is arranged to define a first portion of the flip-top cap/s (a) and a first portion of the lower piece/s (b).

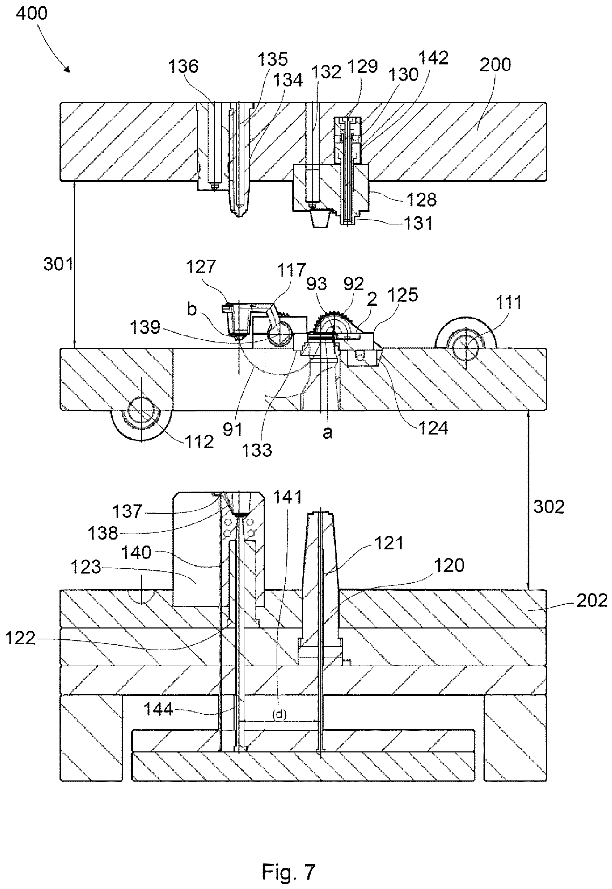

The intermediate second mold portion (201) is configured for being movable in respect to the first mold portion (200) thereby defining a first partition (301), shown in Figure 7. A translation means (not shown) are provided for moving the second mold portion (201) in respect to the fixed first mold portion (200). The length of this first partition (301) is measured for being sufficient for the pivoting means of the led to pivot on the body portion. The second mold portion (201) is arranged to define a second portion of the flip-top cap/s (a) and second portion of the lower piece/s (b).

The intermediate second mold portion (201) also includes a pivotable mold portion (125) comprising four aligned cavity/ies for injecting respective lids (3), wherein this pivotable mold portion (125) is configured to be rotatable about a first rotation axis (93) on the injected upper body/ies (1). According to this pivoting movement, respective first flip-top cap/s (a) in an upwards position joined by a corresponding live hinges (3) and with the lids disposed in a closed position are provided.

On the other hand, the intermediate second mold portion (201) also includes a rotatable support (127, 117, 101) configured to be rotatable about a second rotation axis (139) and being attached right under the first flip-top cap(s) with the lids in the closed position (a) without any interference, so as when mounted a protruding sealing part (5) of the lid (3) is inserted into an upper opening of the lower piece (b) thereby forming a watertight closure between the lid (3) and the lower piece (b), and wherein the distance (d) is determined by the arc (91).

The rotatable support (127, 117, 101) is configured for holding the one or more injected lower piece(s) (b) in a first position where the injected lower piece(s) (b) is/are in a downwards position and are spaced apart a distance ("d") from the position of the corresponding body portion cavities (133), and for rotating the one or more injected lower piece(s) (b) describing an arc (91) of radium (r) from a second rotation point or axis (139) that introduces the injected lower piece(s) (b) from the bottom right under the first flip-top cap(s) with the lids in the closed position (a) and the injected lower piece/s (b) being retained by fastening means.

The bottom third mold portion (202) is configured for being movable in respect to the second mold portion (201), thereby defining a second partition (302), shown in Figure 7. A translation means (not shown) are provided for moving the third mold portion (202) in respect to the second mold portion (200). The length of this second partition (302) is measured for being sufficient for allowing the rotational motion of the holding means (127).

Now that the basic configuration of the injection mold (400) has been described, operational sequence of the mold (400) will now be described.

The main advantage of this new process is that all steps take place in a single mold and within a single injection cycle.

At the beginning of a new molding cycle (i.e. at a beginning of the filling portion of the molding cycle), the mold 102 is actuated into the mold closed configuration (as depicted in Figure 6, although without the flip-top closure cap (a+b) not yet having been formed). The actuation of the mold (400) into the mold closed configuration is generally known in the art and will not be described herein.

Tonnage is then applied by known means, such as a clamp assembly of the injection molding system that houses, in use, the mold (400) to hold the first mold portion (200) and the second mold portion (201) and (202) together to define the corresponding molding cavities. the tonnage is normally applied to counteract the pressure of the molding material being injected into the molding cavities through a hot runner nozzle (not depicted). It is noted that the molding material used for producing the flip-top closure cap (a+b) can be polypropylene (PP), or other material. However, the choice of material for producing the flip-top closure cap (a+b) is considered to be within the purview of a person skilled in the art.

After the first step of closing the mold, the molding material is injected into the molding cavities to fill the molding cavities. In particular, two different injections of molten material takes place:
- a first injection of a molten material into a body portion cavity/ies (133) defined on a first side of the mold, an interior mold core and a pivotable lid cavity/ies (150) defined on a second side for forming the one piece flip-top cap (a) having an body portion (1) and a opened-position lid (3) connected by a living hinge (3), wherein the one piece flip-top cap (a) is disposed in an upwards position; and a
- a second injection of a molten material into a lower piece cavity/ies (151) defined on a third side of the mold.

After that injection step, a first opening movement (301) of a movable portion (201) of the injection mold (400) takes place, wherein a demolding of the injected lid/s (2) and demolding of the injected lower piece/s (b) are produced.

After that first opening movement (301), a second opening movement (302) of the bottom movable portion (202) of the injection mold (400) takes place.

This situation is depicted in Figure 7.

In this situation, the injected lower piece/s (b) are leaved held in a first downwards position by a rotatable support (127), wherein the body portion cavity/ies (133) and the injected lower piece/s (b) in this first position are sufficient clearanced apart a distance ("d") for being rotated with an arc (91) and being positioned under the injected closure cap/s (1) disposed in the body portion cavity/ies (133).

In this situation, with the first and second partitions (301, 302) opened, a pivotable mold portion (125) of a second mold portion (201) pivots with the injected lid/s (2) about a first point or axis of rotation (93) from an original position to a closing position on the injected upper body/es (1), so that the flip-top cap (a) is in a closed position inside the first mold cavity (133).

In this situation, with the first and second partitions (301, 302) opened, the downwards-positioned injected lower piece/s (b) supported by a rotatable support (127) rotates about a second point or axis of rotation (139) for attaching them without any interference right under the first flip-top cap/s (a) with the lid/s being in the closed position, and thereby forming an assembled two-component cap/s (a+b) in a closed configuration.

After these steps, pivoting the pivotable mold portion (125) back from the sealing position to the original position, and rotating the rotatable support (127) back to the original position.

Returning the bottom movable portion (202) to be in contact to the intermediate mold portion (201) for ejecting the two-component cap/s (a+b) by means of the ejector (121).

Various modifications to the above invention will become apparent to those skilled in the art, all of which are intended to fall within the spirit and scope of the present invention, limited only by the appended claims.

## Claims

1. An injection mold (400) for forming a two-component flip-top closure cap/s (a+b) having a flip-top closure cap (a) and a non-releasable lower piece (b), wherein the flip-top cap closure (a) has a body portion (1) and a lid (2) connected to the body portion (1) by a live hinge (3) and wherein the lower piece (b) is disposed under the first flip-top cap (a) and fixed to it by a fastening means, wherein the injection mold (400) comprises at least:
- a first mold portion (200), which remains static during all the molding cycle, which defines a first portion of the flip-top cap/s (a) and a first portion of the lower piece/s (b); and
- a second mold portion (201), which defines a second portion of the flip-top cap/s (a) and second portion of the lower piece/s (b), wherein the second mold portion (201) is configured for being movable in respect to the first mold portion (200) thereby defining a first partition (301);
**characterized in that**
- the second mold portion (201) comprises:
- a pivotable mold portion (125) comprising one or more aligned cavity/ies for injecting respective lids (3), wherein the pivotable mold portion (125) is configured to be pivotable about a first rotation point or axis (93) for mounting the injected lid/s (3) on the injected upper body/ies (1), thereby forming a flip-top cap/s (a) in an upwards position connected by a corresponding live hinge/s (3) and with the lid/s disposed in a closed position; and
- a rotatable support (127, 117, 101) configured to be rotatable about a second rotation point or axis (139) for attaching the injected lower piece/s (b) disposed in a downwards position right under the first flip-top cap/s (a) with the lid/s in the closed position without any interference; and
- the injection mold (400) further comprises a third mold portion (202), which is configured for being movable in respect to the second mold portion (201), thereby defining a second partition (302) that forms a sufficient clearance for the rotational motion of the rotatable support (127).

2. The injection mold (400) according to claim 1, wherein the second mold portion (201) is disposed below the first mold part (200), and the third mold portion (202) is disposed below the second mold portion (201).

3. The injection mold (400) according to claim 1, wherein the second mold portion (201) is configured for being independently movable in a parallel plane in respect to the first mold portion (200).

4. The injection mold (400) according to claim 1, wherein the third mold portion (202) is configured for being independently movable in a parallel plane in respect to the second mold portion (201).

5. The injection mold (400) according to claim 1, wherein additionally comprises other mold portions in the mold (400), for helping to carry out the injection operations.

6. The injection mold (400) according to claim 1, wherein the pivotable mold portion (125) is pivotable by means of a pivoting means comprising a rotatable bar (124) that is attached to the pivotable mold portion (125).

7. The injection mold (400) according to previous claim, wherein the rotatable bar (124) is rotatable by means of a supplying means comprises a rack-and-pinion type actuator (109, 105 and 106) operated by a servomotor (103).

8. The injection mold (400) according to claim 1, wherein the rotatable support (127, 117, 101) is rotatable about a second rotation point or axis (139) so as the when the lower piece/s (b) are mounted a protruding sealing part/s (5) of the lid/s (3) is/are inserted into an upper opening of the lower piece (b) thereby forming a watertight closure between the lid (3) and the lower piece (b), and wherein the distance (d) is determined by the arc (91).

9. The injection mold (400) according to claim 1, wherein the rotatable support (127, 117, 101) is rotatable about a second rotation point or axis (139) by means of a holding means (127) for holding the one or more injected lower piece(s) (b) in a first position where the injected lower piece(s) (b) is/are in a downwards position and are sufficient clearanced apart a distance (d) from the position of the corresponding upper body/ies cavities (), and by means of a rotating means (117, 101) for rotating the one or more injected lower piece(s) (b) describing an arc (91) of radium (r) from a second rotation point or axis (139) that introduces the injected lower piece(s) (b) from the bottom right under the first flip-top cap(s) with the lids in the closed position (a) without any interference and the injected lower piece/s (b) being retained by fastening means, so as when mounted a protruding sealing part (5) of the lid (3) is inserted into an upper opening of the lower piece (b) thereby forming a watertight closure between the lid (3) and the lower piece (b), and wherein the distance (d) is determined by the arc (91).

10. The injection mold (400) according to previous claim, wherein the holding means for holding one or more injected lower piece(s) (b) comprises a carrier (127) which is attached to the rotating means (117, 101).

11. The injection mold (400) according to claim 14, wherein the rotating means (117, 101) comprises a rotating arm (117) attached to a longitudinal bar (101).

12. The injection mold (400) according to previous claim, wherein the longitudinal bar (101) is rotatable by means of a supplying means comprising a rack-and-pinion type actuator (108, 107 and 107') a operated by a servomotor (104).

13. The injection mold according to claim 1, wherein the second mold portion (201) further comprises a cavity (133).

14. The injection mold according to claim 1, wherein the first mold portion (200) further comprises elements (129, 130, 131) for defining the protruding sealing part (5) of the lid/s (2).

15. The injection mold according to claim 1 and 9, wherein the first mold portion (200) further comprises respective cavities (128) of the body portion/s and respective housings for the injection nozzle (132) of the upper body (1) for introducing respective injection nozzle/s into the cavity/ies (128) of the body portion.

16. The injection mold according to claim 1, wherein the first mold portion (200) further comprises a first injection nozzle housings (136) for introducing respective injection nozzle/s of the lower piece/s (b).

17. The injection mold according to claim 1, wherein the first mold portion (200) further comprises a third core pullers (134) for defining a portion of an inner surface of the lower piece/s (b).

18. The injection mold according to claim 1, wherein the third mold portion (202) further comprises respective first core pullers (120) for defining a portion of an inner surface of the body portion/s (1).

19. The injection mold according to claim 1, wherein the third mold portion (202) further comprises respective first ejectors (121) for ejecting at the end of the mold process the assembled and closed two-component cap (a+b).

20. The injection mold according to claim 1, wherein the third mold portion (202) further comprises respective second core pullers (122) for forming defining a portion of the lower piece/s (b).

21. The injection mold according to claim 1, wherein the third mold portion (202) further comprises respective second ejectors (144) for ejecting the injected lower piece/s (b) individually.

22. The injection mold according to claim 1, wherein the third mold portion (202) further comprises respective secondary ejectors (140) for ejecting the cold runner (137).

23. The injection mold according to claim 1, wherein one or more cooling circuit/s (135) for cooling the resulting closed two-component cap (a+b) before being ejected.

24. A process for forming a two-component flip-top closure cap (a+b) having a first flip-top cap (a) and a non-releasable lower piece (b), wherein the first flip-top cap (a) has a body portion (1) and a lid (2) connected to the body portion (1) by a live hinge (3) and wherein the lower piece (b) is disposed under the first flip-top cap (a) and fixed to it by a fastening means, wherein a mold defined in any one of the previous claim is used, **characterized in that** the process takes places in a single mold and within a single injection cycle, and wherein the process comprises the steps of:
- injecting a molten material into a body portion cavity/ies (133) defined on a first side of the mold, an interior mold core and a pivotable lid cavity/ies (150) defined on a second side for forming the one piece flip-top cap (a) having an body portion (1) and a opened-position lid (3) connected by a living hinge (3), wherein the one piece flip-top cap (a) is disposed in an upwards position;
- injecting a molten material into a lower piece cavity/ies (151) defined on a third side;
- a first opening movement (301) of a movable portion (201) of the injection mold (400), wherein a demolding of the lid/s (2) and demolding of the lower piece (b) are produced;
- a second opening movement (302) another movable portion (202) of the injection mold (400);
- leaving the injected lower piece/s (b) held in a first downwards position by a rotatable support (127), wherein the body portion cavity/ies (133) and the injected lower piece/s (b) in this first position are spaced apart a distance ("d") for being rotated with an arc (91) and being positioned under the injected closure cap/s (1) disposed in the body portion cavity/ies (133);
- with the first and second partitions (301, 302) opened, pivoting a pivotable mold portion (125) of the mold (400) with the injected lid/s (2) about a first point or axis of rotation (93) from an original position to a closing position on the injected upper body/es (1), so that the flip-top cap (a) is in a closed position inside the first mold cavity (133);
- with the first and second partitions (301, 302) opened, rotating the downwards-positioned injected lower piece/s (b) about a second point or axis of rotation (139) for attaching them without any interference right under the first flip-top cap/s (a) with the lid/s being in the closed position, and thereby forming an assembled two-component cap/s (a+b) in a closed configuration;
- pivoting the pivotable mold portion (125) back from the closing position to the original position, and rotating the rotatable support (127) back to the original position.
- returning the bottom movable portion (202) to be in contact to the intermediate mold portion (201) for ejecting the two-component cap/s (a+b) by means of an ejector (121);
- so that this process allows the separate injection of both components (one piece flip-top cap/s with lid opened (a) and lower piece (b)) into the same mold and at the same time, allows after the closure of the lid (3) on the base portion (1), and also the assembly of the injected lower piece/s (b) under the one piece flip-top cap/s with lid closed (a).

25. The process according to claim 1, wherein the step of injecting a molten material into a first mold cavity/ies (133) and into a pivotable second mold cavity/ies () is produced simultaneously.

26. The process according to claim 1, wherein the step of injecting a molten material into a first mold cavity/ies (133) and into a pivotable second mold cavity/ies () and the step of injecting a molten material into the third mold cavity/ies () are produced simultaneously.

27. The process according to claim 1, wherein the step of rotating the lid(s) (2) is/are produced simultaneously with the step of rotating the lower piece/s (b).

28. The process according to claim 1, wherein the step of rotating the lid(s) (2) is/are produced overlapped with the step of rotating the lower piece/s (b), but the closing of the lid/s (2) is/are produced before the assembling of the lower piece/s (b).

29. The process according to claim 1, wherein before the last step of activating the ejector (121) a cooling step of the one piece flip-top cap/s (a+b) is produced.

30. The process according to claim 1, wherein the second opening movement (302) allows that releasing the negative of the anchoring surface portion (4) of the body portion (1) without deforming it by means of a main core pullers (120).
